Europäisches Patentamt

(19) European Patent Office

Office européen des brevets

(11) Publication number: **0 067 017**
**B1**

# EUROPEAN PATENT SPECIFICATION

(45) Date of publication of patent specification: **04.03.87**

(21) Application number: **82302773.5**

(22) Date of filing: **28.05.82**

(51) Int. Cl.⁴: **G 02 B 6/00, C 03 B 37/05, C 03 B 37/025**

(54) Polarization plane maintaining optical fiber and fabricating method therefor.

(30) Priority: **29.05.81 JP 77238/81 u**
**20.07.81 JP 112137/81**

(43) Date of publication of application:
**15.12.82 Bulletin 82/50**

(45) Publication of the grant of the patent:
**04.03.87 Bulletin 87/10**

(84) Designated Contracting States:
**DE FR GB**

(56) References cited:
**EP-A-0 032 390**
**EP-A-0 041 864**
**GB-A-2 012 983**
**GB-A-2 022 571**
**GB-A-2 032 910**
**US-A-4 106 847**

The file contains technical information
submitted after the application was filed and
not included in this specification

(73) Proprietor: **Hitachi, Ltd.**
**5-1, Marunouchi 1-chome**
**Chiyoda-ku Tokyo 100 (JP)**

(72) Inventor: **Matsumura, Hiroyoshi**
**264-61, Kubo Hidakamachi**
**Iruma-gun Saitama-ken (JP)**
Inventor: **Katsuyama, Toshio**
**1-47-1-D202, Akatsuki-cho Hachioji-shi**
**Tokyo (JP)**
Inventor: **Suganuma, Tsuneo**
**5-17-5, Nakaarai Tokorozawa-shi**
**Saitama-ken (JP)**

(74) Representative: **Paget, Hugh Charles Edward**
**et al**
**MEWBURN ELLIS & CO. 2/3 Cursitor Street**
**London EC4A 1BQ (GB)**

Courier Press, Leamington Spa, England.

## Description

The present invention relates to a method of fabricating an optical fiber mother rod.

As the development of optical fibers has progressed, it has become known to use an optical integrated circuit to act as an optical circuit such as an optical isolator or an optical switching circuit. The waveguide structure used in optical integrated circuits is basically of the slab type, because the light has to be polarized in order to use an integrated circuit as a switching circuit. Such an optical integrated circuit is usually coupled to another optical device by means of a circular optical fiber. Then the optical fiber must maintain the polarization plane in a predetermined direction.

Moreover, it has been proposed to conduct a variety of measurements by making use of the polarization plane of the light. If these measurements of the transmission of the light are conducted while the polarization plane of the light is maintained, a problem occurs. In order to improve the transmission efficiency of the optical energy and the ease of fabrication, it is particularly desirable to transmit the light using a circular waveguide tube (i.e., an optical fiber) which has by now reached a practical stage, while still maintaining the polarization plane.

A previously proposed circular optical fiber which maintains the polarization plane is constructed of a core, an intermediate layer which has an irregular thickness such as to induce a stress in the core so that an index difference (which will be referred to as a "strain birefringence") may be made equal to or higher than a predetermined level to maintain the polarization plane in the core in accordance with the difference in the mechanical stresses taken in the waveguide regions and along the transverse directions intersecting at a right angle (reference should be made to "Birefringence in elliptically clad borosilicate singlemode fibers". Applied optics/vol. 18. No. 2415. DEC 1979).

In order to maintain the polarization plane, the value of the coupling length, L, defined by the following Equation should be as small as possible:

$$\frac{2\pi}{\Delta\beta}=L$$

wherein the difference in the propagation constant between two orthogonally polarized fundamental modes is designated as $\Delta\beta$. If the core has a circular shape, therefore, the difference $\Delta\beta$ in the above-defined constants is determined by the difference $\Delta n$ in the refractive indexes for the two directions of polarization. Moreover, that difference $\Delta n$ in the refractive indexes is proportional to the difference in the strain in those two directions, which is caused by the difference in the thermal expansion coefficient between the intermediate layer and the core.

In the proposal thus far described, however, in order to make the thickness of the jacket irregular, the jacket has to be deformed at an initial stage so that its fabricating process is complicated. In reality, moreover, the coupling length L obtained is at least 10 mm.

It is known from GB—A—2012983 to form an optical fiber having a circular core, an elliptical intermediate layer formed on the core, and an outer support on the intermediate layer. This fiber is formed by the collapse of a hollow silica glass tube which has glass layers formed on its inner surface. The first glass film formed on the wall of the silica glass tube has a lower softening point than the silica glass tube, and the second glass film formed on the first glass film has a higher softening point than the first glass film. This document therefore corresponds to the precharacterising part of claim 1.

There is a problem however, in providing an optical fiber in which the difference $\Delta B$ between the propagation constants in the perpendicular directions of the optical axis of the fiber (which determines the ability to maintain the polarization plane) has a high value and which can be fabricated without difficulty. Naturally, it is desirable to provide an optical fiber which has a low transmission loss but an intense ability to maintain the polarization plane.

The present invention seeks to overcome this problem by forming the mother rod such that the first and second glass films have their thicknesses within the range expressed by:

$$\sqrt{\frac{(t1+t2)(100-\gamma)}{t1\ (100+\gamma)}}=\frac{C_2}{a}\geq\frac{200}{100-\gamma}-1$$

where t1 is the thickness of the first glass film before collapse

t2 is the thickness of the second film before collapse

$\gamma$ is the desired ellipticity of the first film after collapse

$C_2$ is the desired length of the minor axis of the first film after collapse, and

a is the radius of the second film after collapse.

Therefore, the first film (which forms an intermediate layer) acts only to stress the core and hence give rise to birefringence in the core. Such an intermediate layer will be referred to herein as a 'jacket' to distinguish it from 'cladding', an intermediate layer in known fibers. It is found that light is propagated through the core (formed by the second film) but not through the intermediate layer.

It is possible to prevent the light from propagating in the jacket in a number of ways. EP—A—0032390 published after the priority date of the present application, discloses an optical fiber in which the core comprises two layers, an inner core and an outer core which acts as a cladding. The refractive index of the cladding is equal to that of the jacket and it is then found that the light is concentrated almost entirely within the core and cladding.

It has been found that other arrangements are possible to restrain the light to the core only.

Thus, if the parameters of the jacket are suitably set, substantially all the optical energy can be concentrated exclusively in the optical waveguide, and the refractive indexs of the optical waveguide in the perpendicular optical axes are made different by the strain induced by the elliptical jacket to establish the birefringence thereby to enlarge the phase propagation constant difference $\Delta b$. In this way an optical fiber having an intense ability to maintain the polarization plane may be fabricated. Since the jacket which occupies a quantitatively large portion of the material contains an insignificant amount of the optical energy, there is no need to take the optical transmission loss of the jacket into consideration so that the fabrication of the optical fiber can be facilitated.

It is preferable that the first glass film, which is to form the jacket, is made of a silica glass containing $B_2O_3$. This enables said preform rod to have a sectional structure with a circular central core an intermediate layer having an elliptical outer circumference and an outermost circumferential layer having a circular or quasi-circular shape.

Incidentally, the central core and the intermediate layer need not be limited to a single layer, but may be composed of a plurality of sub-layers.

In the present specification and claims, ellipses are to be construed as having an ellipticity

$$\gamma = \left\{ \frac{C_1 - C_2}{C_1 + C_2} \times 100 \right\}$$

higher than 3%, wherein the major and minor axes of the ellipse are designated by $C_1$ and $C_2$, respectively. Ellipses having a lower ellipticity can be construed as circles.

With the preferred method of the present invention a highly reproducible optical fiber mother rod, in which the optical waveguide has a circular shape and in which the intermediate layer has an arbitrary ellipticity can be made by fixing the radius and thickness of the glass tube, the inner pressure and the glass materials of the glass thin films.

If the central core is circular and the intermediate layer is elliptical, the refractive indexs of the central core in the perpendicular axial directions can be made different without any difficulty so that an optical fiber facilitated to maintain the polarization plane can be produced.

Preferred embodiments of the invention will be set forth in detail in conjunction with the accompanying drawings, wherein:

Fig. 1 is a view showing the sectional construction of an optical fiber;

Figs. 2 and 3 illustrate refractive indexs of optical fibers according to the present invention;

Fig. 4 shows the steps of a method of fabricating an optical fiber according to the present invention;

Fig. 5 illustrates the relationship between the thicknesses of the layers forming an optical fiber mother rod and the ellipticity of an elliptical layer;

Figs. 6 and 7 are sectional views respectively showing a glass tube and a preform for explaining Fig. 2;

Fig. 8 illustrates the relationship between the degree of the vacuum in the glass tube and the ellipticity of the elliptical layer;

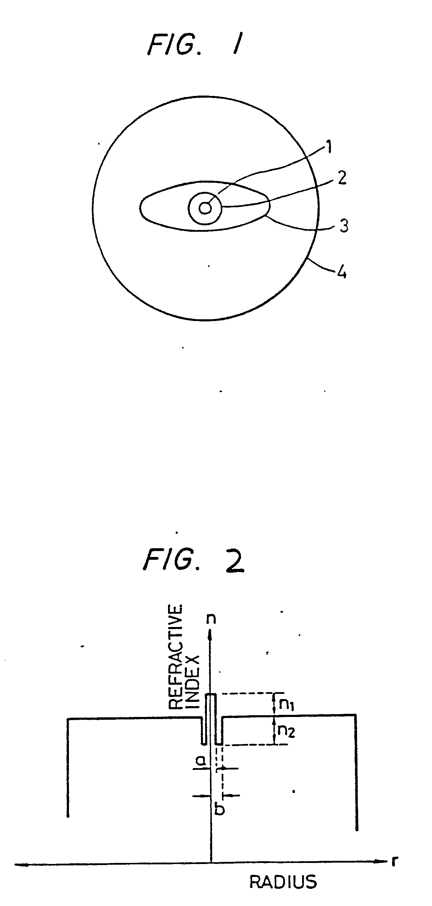

Fig. 1 shows the sectional construction of an optical fiber. As shown, the optical fiber has a core having a circular inner core 1; a circular outer core or cladding 2 which is formed concentrically of the inner core; a jacket 3 which is formed on the outer circumference of the cladding and which is made to have an elliptical outer circumference; and a support 4 which is formed on the outer circumference of the jacket 3.

In another optical fiber illustrated in Fig. 2, the outer core or cladding 2 consists of two layers, one of which has a refractive index lower than both the inner core 1 and the jacket 3 and the other of which has a refractive index equal to that of the jacket 3. This arrangement has the advantage of reducing the disturbance in the polarisation plane when the optical fiber is bent for use.

The inner core 1 is desirably made of $SiO_2$ glass i.e. silica glass containing germanium dioxide and/or phosphorus pentoxide. This is because the dopants of those two components have low optical transmission losses. However, the dopants of the core are not limited to either germainum dioxide or phosphorus pentoxide. Suitable dopants are, for example, antimony pentoxide and aluminum oxide, for example, if the latter has a higher refractive index than the $SiO_2$ glass. Alternatively, a dopant such as boric oxide having a lower refractive index than the $SiO_2$ glass may be used if it is used together with another dopant having a higher refractive index than the $SiO_2$ glass.

It is desirable that both layers of the cladding 2 are $SiO_2$ glass. The absorption loss of $SiO_2$ glass is so low that the transmission loss of the optical fiber can be reduced if the cladding is made of $SiO_2$ glass. The elliptical jacket 3, on the other hand, is prepared by adding germanium dioxide or phosphorus pentoxide (which enhances the refractive index) to $SiO_2$ glass containing the boric oxide so that the refractive index of the elliptical jacket 3 may be identical to that of the outer layer of the cladding 2 and possibly the support 4. Alternatively, the elliptical jacket may be prepared by using $SiO_2$ glass having an additional fluoride compound as a substrate and by adding thereto germanium dioxide, phosphorus pentoxide or the like. In short, the material for the jacket is not especially limited if it has a large difference in the thermal expansion coefficient from the support 4. The material making the support 4, on the other hand, is desirably $SiO_2$ glass because this enables there to be a large thermal expansion coefficient difference between it and the elliptical jacket 3 and also makes fabrication easier.

If the optical fiber has the construction of this embodiment, the optical energy is concentrated in the core (i.e. inner core 1 and cladding layers 2). Therefore the choice of materials for the jacket 3 and the supporting portion 4 does not cause any effect on transmission loss. Since it is sufficient that the jacket may be selected with a view to establishing a high birefringence in the aforementioned core, fabrication can be made very easy. Specifically, since the core and the jacket are independent of each other, the distribution of the refractive index in the core can be changed without deteriorating the birefringence.

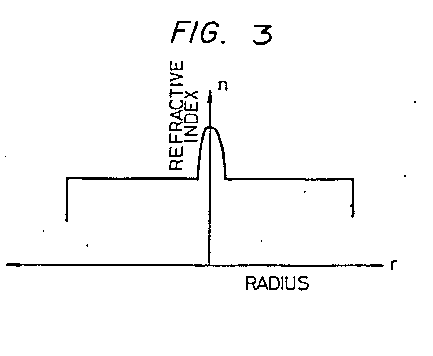

In another optical fiber, illustrated in Fig. 3, the refractive index of the core decreases outwardly, and at the periphery of the core is equal to the refractive index of the jacket. Again, the outer circumference of the jacket is elliptical.

The outer circumference of the support 4 is shown as circular in Fig. 1. However, for some applications it is necessary to know the orientation of the ellipse of the jacket and to achieve this the support 4 may also be elliptical with its major and minor axis corresponding to the axes of the ellipise of the jacket.

Specific examples of the present invention will be described.

Example 1

On the inner wall of a silica tube (which has an external diameter of 18 mm$\phi$ and an internal diameter of 15 mm$\phi$), there were consecutively deposited by CVD $SiO_2$—$GeO_2$—$B_2O_3$ glass to form the jacket, a first layer of $SiO_2$ glass and a second layer of $SiO_2$—$B_2O_3$ glass to form the cladding (outer core), and a layer of $SiO_2$—$GeO_2$ glass to form the inner core. Subsequently, the tube was collapsed, while having its internal pressure reduced—8 mm $H_2O$ lower than the atmospheric pressure, to fabricated an optical fiber which was constructed of a circular core made of the $SiO_2$—$GeO_2$ glass, a cladding made of the $SiO_2$ glass, an elliptical jacket made of the $SiO_2$—$GeO_2$—$B_2O_3$ glass, and a support made of the $SiO_2$ glass. In the optical fiber thus fabricated, the inner core, the two layers of the cladding and the elliptical jacket had refractive indexes of 1.003n, 0.997n, 1.00n and 0.999n, respectively, where the refractive index of the support is indicated by the letter n. The inner core and the inner layer of the cladding had radii of 12 $\mu$m and 16 $\mu$m, respectively, and the outer radius of the cladding was 30 $\mu$m. The elliptical jacket had a major axes of 100 $\mu$m and a minor axis of 35 $\mu$m. The radius of the support was 150 $\mu$m. The extinction ratio of the optical fiber at 500 m for a wavelength of 0.633 $\mu$m (i.e., the optical power ratio at the emanating ends between the optical axis in the direction of incident light and the other optical axis when a linearly polarized light was incident in one optical axis) was 30 dB, and the transmission loss for a wavelength of 1.55 $\mu$m was 0.9 dB/Km.

Example 2

An optical fiber having such a refractive index distribution as is shown in Fig. 3 was fabricated by a method similar to that of Example 1. The core radius, the cladding radius and materials of the optical fiber were identical to those of Example 1, and the refractive index of the core was 1.006 n at the center portion. The extinction ratio of this optical fiber for a wavelength of 0.633 $\mu$m was 36 dB, and the transmission loss was 0.4 dB/Km for a wavelength of 1.55 $\mu$m.

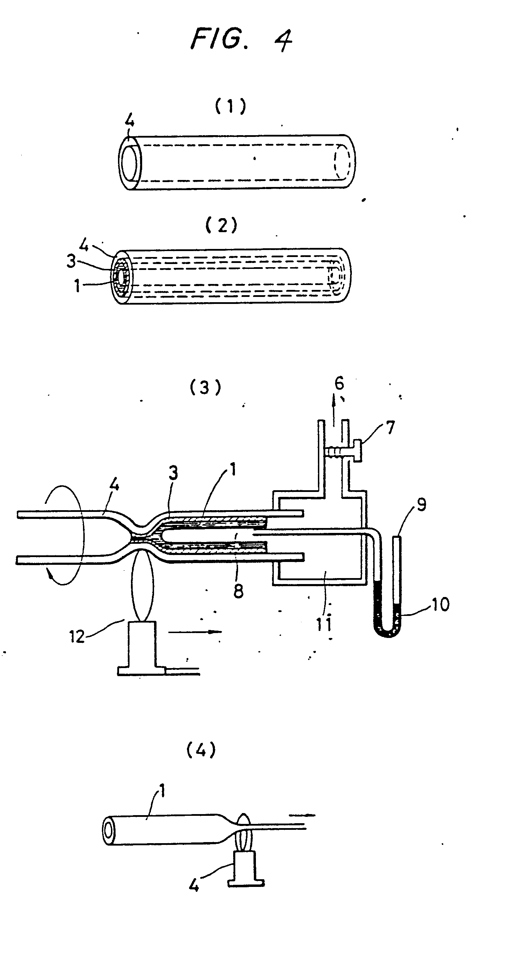

Next, the method of preparing the foregoing optical fiber mother rod will be described hereinafter, referring to Fig. 4.

(1) First of all, the silica glass tube 4 acting as the substrate of an optical fiber is prepared. If the glass tube has a large radius but a small thickness, it is difficult to obtain a predetermined shape at a subsequent pressure-reducing step (3). If necessary, therefore, there is included a step of reducing the radius. The glass tube may desirably have an external radius of 5 mm to 50 mm and a thickness of 0.3 mm to 5 mm.

(2) On the inner wall of the aforementioned glass tube 4, there are formed by the chemical vapor deposition (CVD) method the glass thin film 3 to provide the intermediate layer of the optical fiber and the glass thin film 1 to provide the center layer. The intermediate layer may have the function of the cladding or the functions of the jacket and the cladding of the optical fiber, as the case may be. On the other hand, the center layer may form either only the core or the core and the cladding (i.e., the optical waveguide) of the optical fiber, as the case may be.

Those materials and thicknesses will be described in more detail hereinafter.

(3) The glass tube having the glass films formed in the aforementioned step has both its ends clamped by a glass lathe (not shown) and is rotated at a predetermined r.p.m. As shown, one end portion of the tube attached to a table is heated by an oxy-hydrogen burner 12 so that it may be collapsed. To the other open end portion of the glass tube, moreover, there is connected an exhaust tank 11, which is evacuated through an exhaust tube 6, while adjusting an exhaust control valve 7, so that the pressure in the tube may be reduced until it takes a predetermined level. The pressure reduction is metered in terms of the difference in the levels of a liquid 10 by means of a U-shaped tube 9 which has its one end inserted in the inside 8 of the silica glass tube. In this state, the heat source (i.e., the burner) 12 is gradually moved to prepare a solid preform. The degree of the pressure reduction is set at about 10 to 200 Pa (1 mmH$_2$O to 20 mmH$_2$O).

(4) The preformed rod is melted by means of the oxyhydrogen burner 12 and is drawn in one direction. Then, an optical fiber having an elliptical intermediate layer is realized.

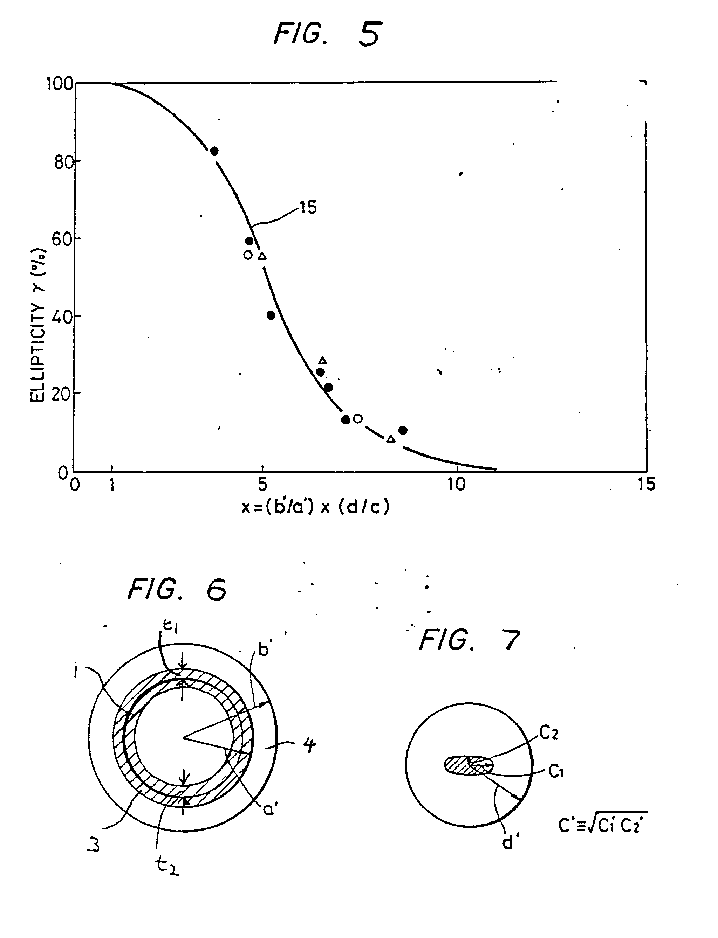

Fig. 5 illustrates the relationship between the ellipticity of the inner circumference (i.e., the outer circumference of the center or intermediate layer) of the outermost layer of the preformed rod, which was prepared by the method of the present invention, and the thicknesses of the respective layers before and after the solidification. The ordinate indicates the ellipticity of the elliptical layer of the preform, and the abscissa indicates a product of $(b'/a') \times (d'/c')$, in which letters $b'$, $a'$, $d'$ and $c'$ indicate the external radius of the silica glass tube before collapsing the internal radius of the same, the external radius of the preform, and the average diameter $(=\sqrt{c_1 \cdot c_2})$ of the elliptical layer, respectively, as shown in Figs. 6 and 7. The fabricating conditions are such that the collapsing temperature is 1800°C, the pressure reduction 78 Pa (8 mmH$_2$O), the burner speed of the oxyhydrogen burner 0.8 mm/sec, and the glass thin film is made of silica glass containing GeO$_2$ and B$_2$O$_3$ as dopants. Black circles, white circles and white triangles appearing in Fig. 5 are plotted for the initial silica tube radii of 14, 18 and 20 mm, respectively.

In view of Fig. 5, it is found that the ellipticity $\gamma$ is expressed by the following Equation:

$$\gamma = 100e^{-A(x-1)^2} \ [\%]$$
$$x = (b'/a') \times (d'/c') \tag{1}.$$

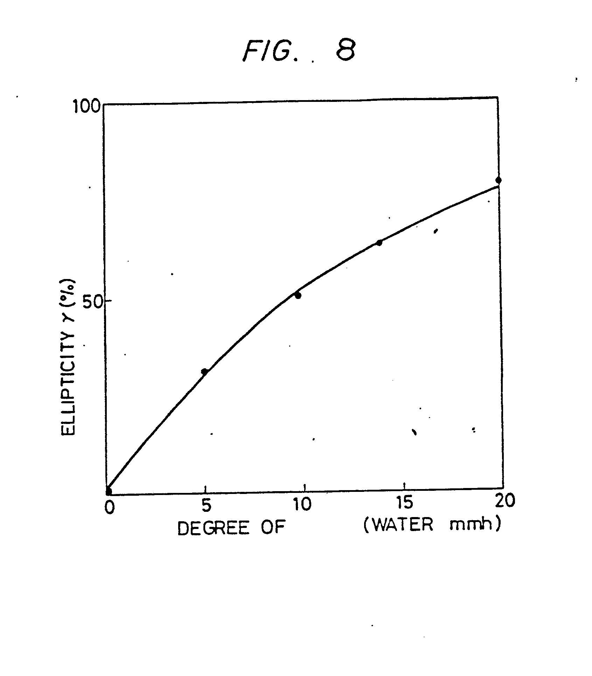

The aforementioned Equation (1) holds even if the collapsing temperature (1700 to 2000°C), the burner speed (0.02 to 0.2 mm/sec) of the heat source 12, and the composition of the deposited glass are changed within such ranges as are practically used in the fabrication of the optical fiber. Moreover, letter A appearing in the aforementioned Equation (1) designates a constant which is determined by the degree of the pressure reduction, and Fig. 8 illustrates the relationship between the aforementioned ellipticity and the degree P of the pressure reduction, which is experimentally determined. From the same Figure, the constant A is determined by the following Equation:

$$A = \frac{0.344}{P} \tag{2}$$

In order to prepare a preformed rod formed with an elliptical layer having a predetermined ellipticity $\gamma$, therefore, if a silica glass tube is used as the substrate and if the collapsing temperature and the burner speed of the heat source are 1700 to 200°C and 0.2 to 2 Pa (0.02 to 0.2 mmH$_2$O) respectively, the pressure reduction degree P and the radii and thicknesses of the respectively layers may be set on the basis of the following Equations:

$$\gamma = 100e^{-\frac{0.344}{P}(x-1)^2} \tag{3};$$

and

$$x = (b'/a') \times (d'/c') \tag{4}.$$

Incidentally, if the deposited glass layers are sufficiently thinner than the silica glass tube, even if they are not one but a plurality of layers, the above-identified Equations hold at all times.

One of the major advantages of the fabrication method of the present invention is that it is possible to easily produce an optical fiber mother rod which has such a layer construction in the preform section that the outermost layer is generally circular, that the intermediate layer has an elliptical outer circumference and that the center layer is generally circular, as shown in Fig. 1.

Thus, in order that the intermediate layer may have a larger ellipticity than the center layer, its material has a lower softening point than that of the core material. This is achieved by adding B$_2$O$_3$ and SiO$_2$ to the material of the intermediate layer. The softening point becomes lower as the quantity of the B$_2$O$_3$ added is increased. In order to enlarge the difference in the thermal expansion coefficient, however, it is desired that the quantity of the dopant B$_2$O$_3$ be 3 mol% to 30 mol%. In order to make the center layer circular, moreover, the thickness of the glass film formed on the inner wall of the glass tube is preset by the following equation:

$$\sqrt{\frac{(t1+t2)(100-\gamma)}{t2(100+\gamma)}} = \frac{C_2}{a} \geqslant \frac{200}{100-\gamma} - 1$$

where

$t1$ is the thickness of the first glass film before collapse

$t2$ is the thickness of the second film before collapse

$\gamma$ is the desired ellipticity of the first film after collapse

$C_2$ is the desired length of the minor axis of the first film after collapse, and

$a$ is the radius of the second film after collapse.

These requisites arise because when the glass tube formed with the glass films is collapsed while having its internal pressure reduced, the temperature gradient is initially higher at the outer side. Because of the thickness of the tube, the outer side is little influenced by the pressure reduction so that the circular shape is maintained mainly by the surface tension. The inner side is dominated mainly by the amount of pressure reduction so that it is flattened. If the heating treatment further continues, the inner side has its temperature so raised that it is liable to be deformed. As a result, the tube contracts while being flattened by the reduction in pressure, to reduce the hollow portion. Meanwhile, the intermediate layer, which has a lower softening temperature, has its viscosity gradually lowered. As a result, when the hollow portion disappears, the center layer is floating in the intermediate layer which has its viscosity lowered. Since, at this time, the pressure of the center portion is not further reduced, the center layer is forced to have a circular shape mainly by surface tension. During the cooling process, moreover, solidification is effected such that the intermediate layer is filled in a clearance between the ellipse formed inside of the aforementioned initial silica tube and the circular core at the center.

As the factors for determining those shapes, therefore, whether or not the center layer is liable to become circular is considered to be determined by the softening point and viscosity of the intermediate layer during the collapsing treatment, the relationship between the relative thicknesses of the intermediate and center layers, and the relationship of the ellipticity of the inner circumference of the outermost layer (accordingly the outer circumference of the intermediate layer).

First of all, the condition for making the outer circumference of the intermediate layer elliptical is determined by the condition of the foregoing Equation (1).

Next, in order that the ellipticity γ of the center layer may become smaller than that of the outer circumference of the intermediate layer, namely, that the center layer may become more circular, it is necessary that the center layer may be made liable to freely become stably circular in the softened intermediate layer during the solidifying process upon the collapsing operation because of the aforementioned reason. For this necessity, it is sufficient that the following inequalities be satisfied:

$$\alpha_1 > \alpha_2; \text{ and } \alpha_3 > \alpha_2 \qquad (6)$$

wherein letters $\alpha_1$, $\alpha_2$ and $\alpha_3$ designate the softening temperatures of the center, intermediate and outermost layers, respectively. In order to satisfy the above conditions, it is desired that the outermost layer be made of silica glass, that the center portion be made of glass containing $SiO_2$ or containing $SiO_2$ and a dopant such as $GeO_2$ or $P_2O_5$ because it is required to have a high refractive index, and that the intermediate layer be made of $SiO_2$ containing 3 mol% to 30 mol% of $B_2O_3$ as a dopant. Moreover, it is experimentally confirmed that the ellipticity of the intermediate layer and the difference of the materials in the intermediate and center layers in addition to the aforementioned softening points exert influences upon the improvement in the circularity of the center layer and that there exists a predetermined relationship among those factors.

Thus, if the term $C_2/a$ is larger than the term $200/(100-\gamma)-1$, the core is naturally liable to become circular by the surface tension. Therefore, when the ellipticity of the intermediate layer is set at γ, and when the thickness, radius and pressure reduction degree of the silica glass tube are set, it is sufficient for making the center layers circular that the thickness of the layers of the glass thin films by the CVD method be so set as to satisfy an inequality of $C_2/a \geq 200/(100-\gamma)-1$ at the preformed state.

Next, specific examples of the fabrication method according to the present invention will be exemplified in the following:

Example 3

On the inner wall of a silica glass tube (which had an external diameter of 18 mm and an internal diameter 15 mm), there was deposited a 50 μm glass thin film of $SiO_2$—$B_2O_3$—$GeO_2$. (That deposition corresponds to the external diameter (2d') 7 mmφ and the average diameter (2c') 3.1 mm of the deposited glass layer after the collapsing treatment. Incidentally, since fine powders of silica are caused to scatter from the outer wall of the silica tube by the heating treatment during the collapsing operation, the external diameter of the preform is made slightly small). In order to have the ellipticity γ of the deposited glass layer at 50%, the pressure reduction degree of 78 Pa (8 mmH₂O) and x=5.0 were attained by using Equation (1). As a result, the ellipticity γ=50% was obtained for

$$b'/a' = 5.0 \times \frac{3.1}{7} = 2.21.$$

A preform having an intermediate layer with an ellipticity of 51% was prepared as a result of the collapsing operation with 2a' (i.e., the internal diameter of the tube before the collapsing operation)=5.1 mm and 2b' (i.e, the external diameter of the tube before the collapsing operation)=11.2 mm.

Example 4

On the inner wall of the silica glass tube (which had the external diameter of 18 mm and the internal diameter of 15 mm), there was consecutively deposited by the CVD method 180 μm of glass containing 15 mol% of $B_2O_3$ and 85 mol% of $SiO_2$ and 3.5μm of glass containing 100 mol% of $SiO_2$. The tube was then heated to form a silica glass tube having an internal radius of 5 mm and an external radius of 11 mm. Subsequently, the tube was collapsed, while having its internal pressure reduced to a level lower than the atmospheric pressure by 78 Pa (8 mmH₂O) to prepare a preformed rod. The preformed rod thus obtained had an external diameter of 9.9 mm, in which the core was a circular shape having a diameter of 10.3 mm and in which the cladding was an ellipse having an ellipticity of 40% and a minor axis of 1.5 mm.

Example 5

On the inner wall of the same silica glass tube as that of Example 4, there were consecutively deposited by CVD 180 μm of glass containing 15 mol% of $B_2O_3$ and 85 mol% of $SiO_2$, 3.2 μm of glass containing 100 mol% of $SiO_2$ and 0.3 μm of glass containing 4 mol% of $GeO_2$ and 96 mol% of $SiO_2$. After that, the silica glass tube was heated to form a silica glass tube having an internal diameter of 5 mm and an external diameter of 11 mm. Then, the tube was collapsed, while having its internal pressure reduced to a level lower than the atmospheric pressure by 78 Pa (8 mmH₂O) to prepare a solidified preformed rod. The preformed rod thus obtained had an external diameter of 9.9 mm, in which the $SiO_2$ layer and the $SiO_2+GeO_2$ layer of the center portion were concentrically circular shapes having radii of 0.32 mm and 0.095 mm, respectively, and in which the outer circumference of the $SiO_2+B_2O_3$ layer had an ellipticity of 27%.

It will be understood that the method of the invention may vary from the above examples. In the preferred methods, the thickness of the silica glass tube 4 may be between 0.3 mm and 5 mm, and its external radius may be between 5 mm and 50 mm. The internal pressure during collapsing of the tube may be lower than the external pressure by between 10 and 290 Pa (1 $mmH_2O$ and 30 $mmH_2O$).

**Claims**

1. An optical fiber mother rod fabricating method comprising:

forming a first glass film (3) on the inner wall of a silica glass tube (4), the first glass film (3) having a lower softening point than the silica glass tube (4);

forming a second glass film (1, 2) on the inner wall of the first glass film (3), the second film glass (1, 2) having a higher softening point than that of the first glass film (3); and

subsequently collapsing the silica glass tube (4) whilst keeping its internal pressure lower than the external pressure, thereby fabricating a solid optical fiber mother rod; characterised in that:

the first (3) and second glass films (1, 2) have their thicknesses within the range expressed by:

$$\sqrt{\frac{(t1+t2)\ (100-\gamma)}{t1\ (100+\gamma)}} = \frac{C_2}{a} \geqq \frac{200}{100-\gamma}-1$$

where t1 is the thickness of the first glass film before collapse

t2 is the thickness of the second film before collapse

γ is the desired ellipticity of the first film after collapse

$C_2$ is the desired length of the minor axis of the first film after collapse, and

a is the radius of the second film after collapse.

2. An optical fiber mother rod fabricating method according to claim 1, wherein the first glass film (3) is made of a silica glass containing $B_2O_3$.

**Patentansprüche**

1. Herstellungsverfahren für einen Mutterstab einer optischen Faser, aufweisend:

Bilden eines ersten Glasfilms (3) auf der Innenwand einer Siliziumoxid-Glasröhre (4), wobei der erste Glasfilm (3) einen niedrigeren Erweichungspunkt als die Silzuimoxid-Glasröhre (4) hat;

Bilden eines zweiten Glasfilms (1, 2) auf der Innenwand des ersten Glasfilms (3), wobei der zweite Glasfilm (1, 2) einen höheren Erweichungspunkt als der erste Glasfilm (3) hat; und

anschließendes Zusammenziehen der Siliziumoxid-Glasröhre (4), während ihr Innendruck niedriger als der Außendruck gehalten wird, wodurch ein massiver Mutterstab einer optischen Faser hergestellt wird; dadurch gekennzeichnet,

daß die Dicken des ersten (3) und des zweiten Glasfilms (1, 2) innerhalb des folgendermaßen ausgedrückten Bereiches liegen:

$$\sqrt{\frac{(t1+t2)(100-\gamma)}{t1(100+\gamma)}} = \frac{C_2}{a} \geqq \frac{200}{100-\gamma}-1$$

wobei t1 die Dicke des ersten Glasfilms vor dem Zusammenziehen ist,

t2 die Dicke des zweiten Films vor dem Zusammenziehen ist,

γ die gewünschte Elliptizität des ersten Films nach des Zusammenziehen ist,

$C_2$ die gewünschte Länge der kleinen Achse des ersten Films nach dem Zusammenziehen ist, und

a der Radius des zweiten Films nach dem Zusammenziehen ist.

2. Herstellungsverfahren für einen Mutterstab einer optischen Faser nach Anspruch 1, wobei der erste Glasfilm (3) aus einem $B_2O_3$ enthaltenden Quarzglas hergestellt wird.

**Revendications**

1. Procédé pour fabriquer une tige mère pour fibre optique, consistant à:

former une première pellicule de verre (3) sur la paroi intérieure d'un tube (4) en verre de silice, la première pellicule de verre (3) possédant un point de ramollissement plus bas que le tube (4) en verre de silice;

former une seconde pellicule de verre (1, 2) sur la paroi intérieure de la première pellicule de verre (3), la seconde pellicule de verre (1, 2) possédant un point de ramollissement supérieur à celui de la première pellicule de verre (3); et

aplatir ultérieurement le tube (4) en verre de silice tout en maintenant sa pression intérieure inférieure à la pression extérieure, en réalisant ainsi tige mère pleine pour fibre optique; caractérisé en ce que

les épaisseurs des première (3) et seconde (1, 2) pellicules de verre sont situées dans la gamme exprimée par:

$$\sqrt{\frac{(t1+t2)(100-\gamma)}{t1\ (100+\gamma)}} = \frac{C_2}{a} \geqq \frac{200}{100-\gamma}-1$$

dans laquelle t1 est l'épasseur de la première pellicule de verre avant aplatissement,

t2 est l'épasseur de la seconde pellicule avant aplatissement,

γ est l'ellipticité désirée de la première pellicule après aplatissement,

$C_2$ est la longueur désirée du petit axe de la première pellicule après aplatissement, et

a est le rayon de la seconde pellicule après aplatissement.

2. Procédé pour fabriquer une tige mère pour fibre optique selon la revendication 1, selon lequel la première pellicule de verre (3) est constituée par un verre de silice contenant du $B_2O_3$.

## FIG. 1

## FIG. 2

FIG. 3

# FIG. 4

(1)

(2)

(3)

(4)

FIG. 5

FIG. 6

FIG. 7

$$C' \equiv \sqrt{C_1 C_2}$$

## FIG. 8